(19) Europäisches Patentamt

European Patent Office

Office européen des brevets

(11) **EP 1 053 917 A1**

(12) **EUROPÄISCHE PATENTANMELDUNG**

(43) Veröffentlichungstag:
**22.11.2000 Patentblatt 2000/47**

(51) Int. Cl.⁷: **B60R 21/32**

(21) Anmeldenummer: **99110004.1**

(22) Anmeldetag: **21.05.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder:
**SIEMENS AKTIENGESELLSCHAFT
80333 München (DE)**

(72) Erfinder:
• **Hermann, Stefan
  93096 Köfering (DE)**
• **Grosshauser, Frank
  86529 Schrobenhausen (DE)**

(54) **Steuervorrichtung für eine Unfallschutzeinrichtung in einem Fahrzeug mit vier Beschleunigungssensoren**

(57) Bei einer Steuervorrichtung für eine Unfallschutzeinrichtung in einem Fahrzeug sind vier Beschleunigungssensoren (8) derart angeordnet, daß ihre Empfindlichkeitsrichtungen in vier unterschiedliche Raumrichtungen zeigen, die keine gemeinsame Ebene aufweisen. Mit Hilfe einer geeigneten Auswerteschaltung können sowohl ein Fehler in einem der Beschleunigungssensoren erkannt werden als auch bei einem fehlerhaften Beschleunigungssensor die Beschleunigungen in Fahrzeuglängs-, Fahrzeugquer- und Fahrzeughochrichtung zur Auslösung der Unfallschutzvorrichtung errechnet werden.

FIG 1

EP 1 053 917 A1

**Beschreibung**

Die Erfindung betrifft eine Steuervorrichtung für eine Unfallschutzeinrichtung in einem Fahrzeug gemäß dem Oberbegriff des Hauptanspruchs. Unfallschutzeinrichtungen, für die die Steuervorrichtung beispielsweise vorgesehen ist, sind Airbageinrichtungen, Gurtstraffer, Überrollbügel usw..

Eine bekannte Steueranordnung (DE 196 45 952 A1) enthält drei Beschleunigungssensoren, die unterschiedlich gerichtete Empfindlichkeitsachsen in einer etwa durch die Fahrzeuglängsachse und die Fahrzeugquerachse festgelegten Ebene aufweisen. In einem Mikroprozessor werden aus zwei der drei von den Sensoren gelieferten Beschleunigungssignalen die Richtung und die Stärke einer auf das Fahrzeug einwirkenden Beschleunigung ermittelt. Zumindest eine dieser ermittelten Größen wird unter Verwendung des von dem dritten Beschleunigungssensor gelieferten Signals überprüft. Wird eine Unstimmigkeit festgestellt, so wird ein Auslösen der Unfallschutzeinrichtung, die einen Airbag, einen Gurtstraffer, einen Überrollbügel usw. umfassen kann, verhindert.

Der Erfindung liegt die Aufgabe zugrunde, eine gattungsgemäße Steuervorrichtung dahingehend weiterzubilden, daß einerseits ein fehlerhafter Beschleunigungssensor festgestellt werden kann und andererseits auch bei einem fehlerhaften Beschleunigungssensor noch eine sichere Erfassung von Beschleunigungen möglich ist, aufgrund derer die Unfallschutzeinrichtung ausgelöst werden kann.

Die der Erfindung zugrundeliegende Aufgabe wird mit einer Steuervorrichtung gemäß dem Anspruch 1 gelöst.

Dadurch, daß erfindungsgemäß vier Beschleunigungssensoren vorgesehen sind, deren Empfindlichkeitsrichtungen in vier unterschiedliche Raumrichtungen zeigen, ist eine Redundanz bezüglich der Berechnung der Beschleunigungen in Fahrzeuglängsrichtung, Fahrzeugquerrichtung und Hochrichtung des Fahrzeugs bzw. den drei Richtungen eines rechtwinkligen Koordinatensystems gegeben, die in unterschiedlichster Weise vorteilhaft ausgenützt werden kann.

Mit den Merkmalen des Anspruchs 2 wird der Vorteil erzielt, daß ein fehlerhafter Beschleunigungssensor dadurch zuverlässig erkannt werden kann, daß das gemäß dem Anspruch 2 errechnete Summensignal einen Schwellwert übersteigt.

Mit den Merkmalen des Anspruchs 3 wird eine besonders sichere Möglichkeit geschaffen, die in der Fahrzeuglängs- -quer- und -hochrichtung wirkenden Beschleunigungen mit dem an sich übereinstimmenden System der Beschleunigungssensoren zu erkennen. Auch bei Ausfall eines Sensors werden noch verwertbare Signale erhalten.

Mit den Merkmalen des Anspruchs 4 kann auch bei Ausfall eines Sensors die in Fahrzeugquer-, -längs- und -hochrichtung wirkende Beschleunigung nach Identifikation des fehlerhaften Sensors genau ermittelt werden.

Mit den Merkmalen des Anspruchs 5 können die niederfrequenten Fahrzeugbeschleunigungen und die höherfrequenten, durch Körperschallübertragung bedingten Beschleunigungen erkannt werden und in intelligenten Auslösealgorithmen für eine sichere Auslösung der Unfallschutzeinrichtung verwertet werden.

Die Ansprüche 6 bis 8 sind auf vorteilhafte Anordnungen der Beschleunigungssensoren und deren Empfindlichkeitsrichtungen gerichtet.

Die Erfindung wird im folgenden anhand schematischer Zeichnungen beispielsweise und mit weiteren Einzelheiten erläutert.

Es stellen dar:

Fig. 1    schematische Aufsicht auf ein Fahrzeug mit Steuervorrichtung und Unfallschutzeinrichtung und

Fig. 2    eine Skizze zur Erläuterung der Anordnung der Beschleunigungssensoren,

Fig. 3    eine Auswerteschaltung und

Fig. 4    eine Skizze zur Verdeutlichung räumlicher Beziehungen.

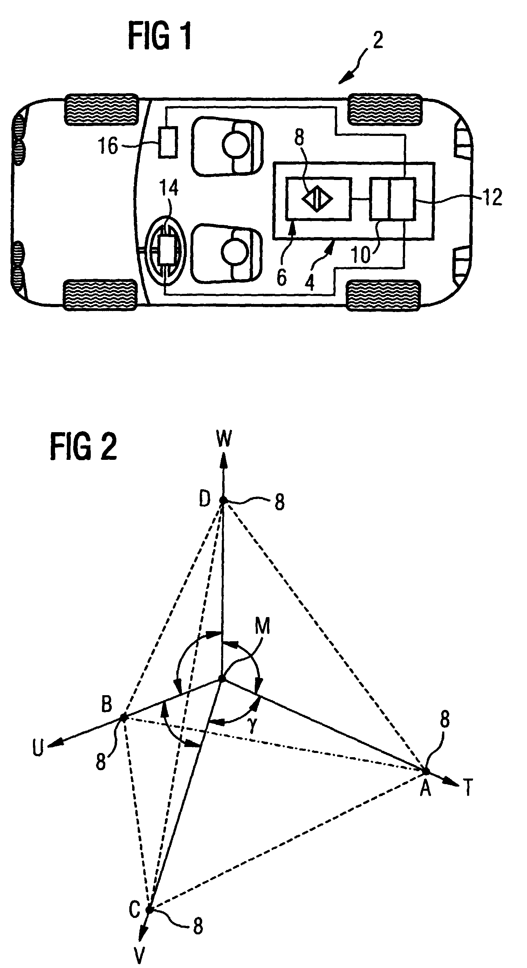

Gemäß Fig. 1 ist in einem Fahrzeug 2 etwa in zentraler Position, beispielsweise im Schwerpunkt, ein Steuergerät 4 angeordnet, das eine Sensoranordnung 6 mit vier in den Ecken eines Tetraeders angeordneten Beschleunigungssensoren 8, eine Auswerteschaltung 10 und eine Steuerschaltung 12 zum Auslösen eines Fahrerairbags 14 und/oder eines Beifahrerairbags 16 aufweist.

Die Auswerteschaltung 10 und die Steuerschaltung 12 können in einem Mikroprozessor mit entsprechenden Programmen zusammengefaßt sein.

Der Aufbau und die Funktion der einzelnen Bauelemente bzw. Baugruppen sind an sich bekannt und werden daher nicht erläutert.

Fig. 2 stellt die Anordnung der vier Beschleunigungssensoren 8 der Sensoranordnung 6 dar.

Jeder der Beschleunigungssensoren 8 befindet sich in der Ecke eines gleichseitigen Tetraeders, dessen sichtbare Kanten gestrichelt sind und dessen nicht sichtbare Kante strichpunktiert ist. Die Beschleunigungssensoren 8 weisen jeweils eine bevorzugte Empfindlichkeitsrichtung auf, in der sie Beschleunigungen und Verzögerungen erfassen und entsprechende Ausgangssignale liefern. Die Beschleunigungssensoren sind in den Ecken A, B, C und D des Tetraeders derart angeordnet, daß sich die Achsen ihrer Empfindlichkeitsrichtungen T, U, V und W im Mittelpunkt M des Tetraeders schneiden. Auf diese Weise bilden die Empfindlichkeitsrichtungen jeweils einen Winkel γ von 120° miteinander.

Die Anordnung der Beschleunigungssensoren 8 in den Ecken eines gleichseitigen Tetraeders ist nicht zwingend. Die Beschleunigungssensoren können auch nahe benachbart auf einer Linie oder in einer Ebene angeordnet sein. Erfindungswesentlich ist vor allem, daß die Empfindlichkeitsrichtungen der Beschleunigungssensoren in vier unterschiedliche Raumrichtungen zeigen, wobei die Anordnung derart ist, daß nicht zwei Empfindlichkeitsrichtungen in einer gemeinsamen Ebene liegen.

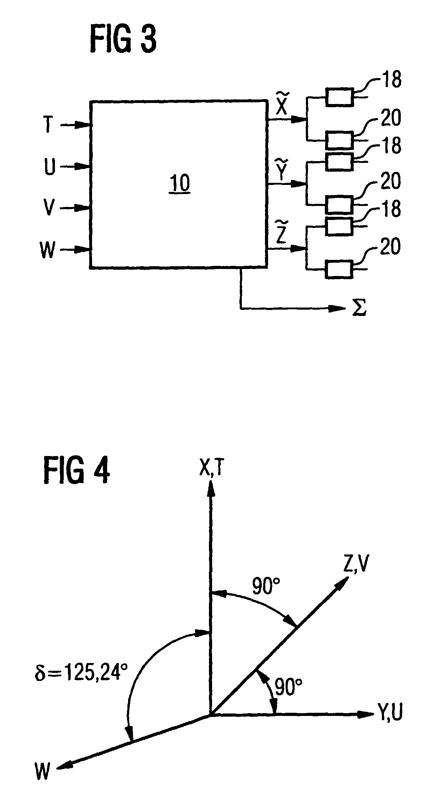

Fig. 3 zeigt ein Beispiel einer Auswerteschaltung. Mit T, U, V, W ist jeweils das Ausgangssignal des Beschleunigungssensors 8 der entsprechenden Empfindlichkeitsrichtung bezeichnet. 10 bezeichnet die Auswerteschaltung. X, Y, Z bezeichnen die aus den Ausgangssignalen T, U, V und W in der Auswerteschaltung 10 errechneten Beschleunigungswerte in X, Y und Z-Richtung, wobei X beispielsweise die Fahrzeuglängsrichtung, Y die Fahrzeugquerrichtung und Z die Fahrzeughochrichtung sein kann. Mit 18 ist jeweils ein Tiefpaßfilter bezeichnet, das nur die Signalanteile mit einer Frequenz von beispielsweise unter 300 Hz durchläßt und mit 20 ist jeweils ein Hochpaßfilter bezeichnet, das die Signalanteile mit Frequenzen oberhalb von beispielsweise 4 kHz durchläßt, so daß ausgangsseitig jeweils Signale zur Verfügung stehen, die der jeweiligen Fahrzeugbeschleunigung und dem jeweiligen Körperschall entsprechen. Die Signale können zur intelligenten Ansteuerung der Airbags verwendet werden und/oder das Körperschallsignal kann beispielsweise als Safing-Signal verwendet werden. Das Hochachsensignal (Z-Signal) kann für eine Überschlagerkennung oder, besonders vorteilhaft, in seinen hochfrequenten Körperschallanteilen, als Safing-Signal verwendet werden. Mit Σ ist ein Ausgangssignal bezeichnet, das der gegebenenfalls gewichteten Summe der Eingangssignale T, U, V und W entspricht.

Mit der erfindungsgemäßen Anordnung der bidirektional empfindlichen Sensoren kann ein Summensignal aus den vier Ausgangssignalen erzeugt werden, das unabhängig von der Beschleunigungsrichtung des Fahrzeugs etwa Null ist. Somit ist der Ausfall eines Beschleunigungssensors oder ein Fehler in dessen Anschlußleitungen dadurch erkennbar, daß das Summensignal größer als ein vorbestimmter Schwellwert ist. Andererseits kann durch Einzelauswertung der Signale der Sensoren die jeweilige Beschleunigung in Fahrzeuglängs-, -quer- und -hochrichtung errechnet werden.

Wenn die Sensoren mit vorbestimmten Empfindlichkeitsrichtungen angeordnet sind und gleiche Empfindlichkeiten aufweisen, können aus den Ausgangssignalen T, U, V und W der Sensoren die Beschleunigungen X, Y und Z in den drei orthogonalen Raumrichtungen nach folgender Formel berechnet werden:

$$N \begin{bmatrix} T \\ U \\ V \\ X \end{bmatrix} = \begin{bmatrix} x \\ y \\ z \end{bmatrix}$$

Für die Bestimmung der Umwandlungsmatrix N (vier Spalten, drei Zeilen) wird dabei vorteilhafterweise die Methode der Minimierung des mittleren Fehlerquadrates eingesetzt.

Es ergeben sich mathematisch besonders einfach zu berechnende Beziehungen, wenn die Beschleunigungssensoren gemäß Fig. 4 angeordnet sind. T fällt dabei mit X zusammen, V mit Z und U mit Y, die jeweils senkrecht aufeinander stehen. W bildet mit den drei orthogonalen Raumrichtungen X, Y und Z einen Winkel δ von jeweils 125, 24°.

Die Umwandlungsmatrix N (vier Spalten, drei Zeilen) beträgt dann unter Anwendung der Minimierung des mittleren Fehlerquadrates als Ausgleichsverfahren:

EP 1 053 917 A1

$$N = \begin{bmatrix} 0,833 & -0,166 & -0,166 & -0,288 \\ -0,166 & 0,833 & -0,166 & -0,288 \\ -0,166 & -0,166 & 0,833 & -0,288 \end{bmatrix}$$

Durch Anwendung dieser Matrix zur Umrechnung lassen sich somit die relevanten Fahrzeugbeschleunigungen sicher herleiten.

Bei der Anordnung der Sensoren gemäß Fig. 4 ergibt sich bei einer Gewichtung des Ausgangssignals W mit dem Faktor 1,73 das Summensignal $\Sigma = T + U + V + 1,73 \times W \approx$ Null , unabhängig von der Richtung der einwirkenden Beschleunigung (Bei der Anordnung der Fig. 2 ist wegen der vollen Symmetrie Gewichtsfaktor Null).

Für die Umrechnungsmatrizen $N_n$, aus denen bei einem defekten Beschleunigungssensor die Beschleunigungswerte in X, Y und Z-Richtung entsprechend der obigen Formel aus den Ausgangssignalen der drei intakten Sensoren errechnet werden können, ergeben sich folgende Matrizen:

Wenn der Beschleunigungssensor T defekt ist, ergibt sich:

$$N_T = \begin{bmatrix} -1 & -1 & -1,73 \\ 1 & 0 & 0 \\ 0 & 1 & 0 \end{bmatrix}$$

Wenn der Beschleunigungssensor U defekt ist, ergibt sich:

$$N_U = \begin{bmatrix} 1 & 0 & 0 \\ -1 & -1 & -1,73 \\ 0 & 1 & 0 \end{bmatrix}$$

Wenn der Beschleunigungssensor V defekt ist, ergibt sich:

$$N_V = \begin{bmatrix} 1 & 0 & 0 \\ 0 & 1 & 0 \\ -1 & -1 & -1,73 \end{bmatrix}$$

Wenn der Beschleunigungssensor W defekt ist, ergibt sich:

$$N_W = \begin{bmatrix} 1 & 0 & 0 \\ 0 & 1 & 0 \\ 0 & 0 & 1 \end{bmatrix}$$

4

Die Auswertung in der Auswerteschaltung 10 kann in einfacher Weise so erfolgen, daß bei überschwelligem Summensignal (Zeichen dafür, daß ein Beschleunigungssenor defekt ist), übergegangen wird auf eine Einzelauswertung anhand der vorgenannten Matrizen, bei der jeweils eine der Auswertungen Beschleunigungen in X-, Y- und Z-Richtung ergibt, die mit den Beschleunigungswerten zumindest annähernd übereinstimmen, die unter Auswertung aller vier Beschleunigungssensoren mit Hilfe der aus vier Spalten und drei Zeilen bestehenden Umrechnungsmatrix berechnet sind, wohingegen die drei anderen der Tripel, die unter Berücksichtigung des Ausgangssignals eines fehlerhaften Beschleunigungssensors ermittelt wurden, weniger gut übereinstimmen. Auf diese Weise kann sowohl der fehlerhafte Sensor erkannt werden als auch die Auslösung der Rückhaltemittel erfolgen, in dem die als richtig erkannten Werte für die Beschleunigungen in X-, Y- und Z-Richtung verwendet werden.

Alternativ kann, sobald mit Hilfe des (gewichteten) Summensignals ein Fehler erkannt wird, durch Einzelabfrage der Sensoren, beispielsweise durch Beaufschlagung mit Prüfimpulsen, der fehlerhafte Sensor ermittelt werden und dann die Berechnung der Beschleunigungen mit der richtigen Matrix erfolgen.

Es versteht sich, daß die Auswerteschaltung 10 in einem Rechner durch Software realisiert sein kann oder unmittelbar in Form von Hardware ausgeführt sein kann.

## Patentansprüche

1. Steuervorrichtung für eine Unfallschutzeinrichtung (14, 16) in einem Fahrzeug (2), enthaltend

   mehrere, in fester räumlicher Beziehung zueinander angebrachte Beschleunigungssensoren (8) zur Erfassung von Beschleunigungen und Verzögerungen in einer sensorabhängigen Empfindlichkeitsrichtung,
   eine Auswerteschaltung (10) zum Auswerten der Ausgangssignale der Beschleunigungssensoren und
   ein Steuergerät (4), welches Elemente der Unfallschutzeinrichtung bei Vorliegen vorbestimmter Bedingungen aktiviert,
   **dadurch gekennzeichnet,** daß
   vier Beschleunigungssensoren (8) vorgesehen sind, deren Empfindlichkeitsrichtungen (T, U, V, W) in vier unterschiedliche Richtungen derart zeigen, daß es keine Ebene gibt, in der zwei Empfindlichkeitsrichtungen liegen.

2. Steuervorrichtung nach Anspruch 1, **dadurch gekennzeichnet,** daß die Auswerteschaltung (10) eine Summierschaltung zum gewichteten Summieren der Ausgangssignale aller Beschleunigungssensoren (8) derart enthält, daß das Summensignal bei intakten Beschleunigungssensoren (8) unabhängig von der Richtung der Beschleunigung etwa Null ist.

3. Steuervorrichtung nach Anspruch 1 oder 2, **dadurch gekennzeichnet,** daß die Auswerteschaltung (10) die Beschleunigungen in Fahrzeuglängs-, -quer- und -hochrichtung aus den Ausgangssignalen der Beschleunigungssensoren (8) nach dem Minimalfehlerverfahren berechnet.

4. Steuervorrichtung nach einem der Ansprüche 1 bis 3, **dadurch gekennzeichnet,** daß die Auswerteschaltung (10) eine Schaltung enthält, die aus den Ausgangssignalen je dreier Beschleunigungssensoren entsprechend deren Richtungsbeziehung die Beschleunigungen in Fahrzeuglängs-, quer- und -hochrichtung errechnet.

5. Steuervorrichtung nach einem der Ansprüche 1 bis 4, **dadurch gekennzeichnet,** daß eine Filtereinrichtung vorgesehen ist, welche aus von den Ausgangssignalen der Beschleunigungssensoren hergeleiteten, in Fahrzeuglängs-, -quer- und -hochrichtung wirkenden Beschleunigungssignalen niederfrequente und hochfrequente Anteile herausfiltert.

6. Steuervorrichtung nach einem der Ansprüche 1 bis 5, **dadurch gekennzeichnet,** daß die Empfindlichkeitsrichtungen der Beschleunigungssensoren jeweils einen Winkel von 120° miteinander bilden.

7. Steuervorrichtung nach einem der Ansprüche 1 bis 6, **dadurch gekennzeichnet,** daß die Beschleunigungssensoren in den Ecken (A, B, C, D) eines gleichseitigen Tetraeders derart angeordnet sind, daß sich ihre Empfindlichkeitsrichtungen (T, U, V, W) im Mittelpunkt M des Tetraeders schneiden.

8. Steuervorrichtung nach einem der Ansprüche 1 bis 5, **dadurch gekennzeichnet,** daß die Empfindlichkeitsrichtungen dreier Beschleunigungssensoren in den drei senkrecht aufeinander stehenden Richtungen eines räumlichen Koordinatensystems liegen und die Empfindlichkeitsrichtung des vierten Beschleunigungssensors mit den drei senkrecht aufeinander stehenden Richtungen einen Winkel von jeweils 125,24° bildet

## FIG 1

## FIG 2

# FIG 3

# FIG 4

**Europäisches Patentamt**

## EUROPÄISCHER RECHERCHENBERICHT

Nummer der Anmeldung

EP 99 11 0004

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.CL7) |
|---|---|---|---|
| Y | WO 96 06328 A (ELFORD PAUL CHRISTOPHER DECLAN ;ELFORD STEPHEN JEREMY (GB)) 29. Februar 1996 (1996-02-29) * Zusammenfassung; Abbildung 2 * | 1,4,6 | B60R21/32 |
| Y | EP 0 709 257 A (DAE WOO ELECTRONICS CO LTD) 1. Mai 1996 (1996-05-01) * das ganze Dokument * | 1,4,6 | |
| A | EP 0 305 656 A (MESSERSCHMITT BOELKOW BLOHM) 8. März 1989 (1989-03-08) * Zusammenfassung; Abbildung 1 * | 1 | |
| A | PATENT ABSTRACTS OF JAPAN vol. 016, no. 105 (P-1325), 16. März 1992 (1992-03-16) & JP 03 282371 A (NEC CORP), 12. Dezember 1991 (1991-12-12) * Zusammenfassung * | 1,6,7 | |
| | | | **RECHERCHIERTE SACHGEBIETE (Int.CL7)** |
| | | | B60R G01P |

Der vorliegende Recherchenbericht wurde für alle Patentansprüche erstellt

| Recherchenort | Abschlußdatum der Recherche | Prüfer |
|---|---|---|
| DEN HAAG | 2. November 1999 | Gaillard, A |

## ANHANG ZUM EUROPÄISCHEN RECHERCHENBERICHT
## ÜBER DIE EUROPÄISCHE PATENTANMELDUNG NR.

EP 99 11 0004

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-11-1999

| Im Recherchenbericht angeführtes Patentdokument | Datum der Veröffentlichung | Mitglied(er) der Patentfamilie | Datum der Veröffentlichung |
|---|---|---|---|
| WO 9606328 A | 29-02-1996 | KEINE | |
| EP 0709257 A | 01-05-1996 | KR 9701747 B | 15-02-1997 |
| | | AU 695023 B | 06-08-1998 |
| | | AU 3710595 A | 23-05-1996 |
| | | BR 9509539 A | 06-01-1998 |
| | | CA 2204009 A | 09-05-1996 |
| | | CN 1168655 A | 24-12-1997 |
| | | JP 10512514 T | 02-12-1998 |
| | | WO 9613407 A | 09-05-1996 |
| | | US 5815393 A | 29-09-1998 |
| EP 0305656 A | 08-03-1989 | DE 3729020 A | 16-03-1989 |
| | | DE 3883464 D | 30-09-1993 |
| JP 03282371 A | 12-12-1991 | KEINE | |

Für nähere Einzelheiten zu diesem Anhang : siehe Amtsblatt des Europäischen Patentamts, Nr.12/82